# EUROPÄISCHE PATENTSCHRIFT

(11) **EP 3 775 638 B1**
(45) Veröffentlichungstag und Bekanntmachung des Hinweises auf die Patenterteilung: **30.08.2023**
(21) Anmeldenummer: 19716882.6
(22) Anmeldetag: 08.04.2019
(51) Int. Cl.: F16K 11/087, F16K 5/06, F01P 7/14, F16K 5/20

(54) **DICHTUNGSANORDNUNG UND FLUIDVENTIL**
SEAL ASSEMBLY AND FLUID VALVE
ENSEMBLE D'ÉTANCHÉITÉ ET SOUPAPE À FLUIDE

(30) Priorität: 12.04.2018 DE 102018205557
(43) Veröffentlichungstag der Anmeldung: 17.02.2021
(73) Patentinhaber: Vitesco Technologies GmbH, 93055 Regensburg (DE)
(72) Erfinder: YAN, Chunxiao, 65824 Schwalbach a. Ts. (DE)
(74) Vertreter: Vitesco Technologies
(86) Internationale Anmeldenummer: PCT/EP2019/058760
(87) Internationale Veröffentlichungsnummer: WO 2019/197312

(56) Entgegenhaltungen:
- DE-A1-102017 004 458
- DE-T5-112016 001 609
- US-A- 2 076 841
- US-A- 3 473 554
- US-A- 5 259 590
- US-A1- 2011 309 280

## Beschreibung

Die vorliegende Erfindung betrifft eine Dichtungsanordnung und ein Fluidventil bzw. Fluidsteuerventil mit einer solchen Dichtungsanordnung. Unter einem Fluidventil bzw. Fluidsteuerventil ist dabei insbesondere ein Kühlwasserventil bzw. Kühlwassersteuerventil, insbesondere zur Verwendung in einem Fahrzeug zu verstehen. Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Die US 2011/0309280 A1 betrifft ein Kugelventil, das einen Ventilkörper mit einem proximalen und einem distalen Abschnitt, eine Aufnahmebaugruppe, die durch den Ventilkörper zusammengedrückt wird, eine Durchflussregelkugel und einen Aktuator zum Betätigen der Durchflussregelkugel zwischen einer offenen und einer geschlossenen Position aufweist. Die Aufnahmebaugruppe kann proximale und distale Aufnahmen, eine mediale Dichtung und O-Ringe enthalten. Die Durchflussregelkugel hat einen Kugelkörper mit einer Außenfläche, die mindestens eine Schulter und einen Hals aufweist, wobei die mindestens eine Schulter einen größeren Radius als der Hals aufweist.

Weiterer Stand der Technik ist aus der DE 10 2017 004 458 A1 bekannt. US3473554 offenbart eine Dichtungsanordnung gemäß dem Oberbegriff des Anspruchs 1.

Aufgabe der vorliegenden Erfindung ist es, eine Dichtungsanordnung zur Verwendung in einem Fluidventil, insbesondere in Gestalt eines Kühlwasserventils, insbesondre zur Verwendung in einem Fahrzeug bereitzustellen, wobei die Dichtungsanordnung höchsten Anforderungen an eine Langzeit-Dichtheit unter bekanntlich großen Temperaturschwankungen einer Verbrennungsmotorenperipherie und/oder einer Elektromotorenperipherie gerecht werden soll. Die Dichtungsanordnung soll darüber hinaus kostengünstig herstellbar sein. Des Weiteren soll die Dichtungsanordnung einen kraft- und reibungsoptimierten Betrieb des Fluidventils ermöglichen.

Diese Aufgabe wird durch den Anspruch 1 gelöst, der eine Dichtungsanordnung zur Verwendung in einem Fluidventil unter Schutz stellt. Es wird ferner ein Fluidventil mit einer solchen Dichtungsanordnung unter Schutz gestellt (vgl. Anspruch 5) sowie eine Verwendung des Fluidventils als Kühlwasserventil (vgl. Anspruch 7). Vorteilhafte Ausführungsformen der Erfindung sind Gegenstand der Unteransprüche.

Es wird eine Dichtungsanordnung zur Verwendung in einem Fluidventil vorgeschlagen. Die Dichtungsanordnung umfasst dabei:
- einen stellbaren Ventilkörper zum Öffnen und Schließen mindestens eines Anschlusses des Fluidventils sowie
- mindestens eine Dichtung zur dichtenden Anlage gegen den Ventilkörper einerseits und zur dichtenden Anlage gegen ein Ventilgehäuse des Fluidventils andererseits.

Am vorgeschlagenen Ventilkörper ist dabei abschnittsweise mindestens eine Erhebung aus der Ventilkörpermantelfläche zur Aktivierung der Dichtung in einer Schließstellung des Fluidventils angeformt.

Unter der besagten Erhebung ist dabei eine Kontur bzw. erhabene Kontur des Ventilkörpers zu verstehen, die aus der Ventilkörpermantelfläche vorspringt bzw. sich aus dieser erhebt, um abhängig von einer Ventilkörperstellung mit der zugeordneten Dichtung zusammen zu wirken. In einer Schließstellung des Ventilkörpers - dies ist zugleich eine Schließstellung des Fluidventils - drückt diese Kontur gegen eine linienförmig bzw. linienartig und/oder flächenförmig bzw. flächenartig dichtwirkende Kontaktstelle der Dichtung. Dadurch wird die Dichtung, die als solche infolge des Zusammenwirkens mit dem Ventilkörper elastisch verformbar ist, gestaucht und verspannt. Dies wiederum geht mit einer Aktivierung der Dichtung einher, die als solche erst durch diese elastische Verformung ihre ganze Dichtwirkung entfaltet. Außerhalb dieser Schließstellung hingegen erfährt die Dichtung eine Entspannung, weil sie dann nicht mit der besagten, erhabenen Kontur zusammenwirkt, denn die Dichtwirkung wird außerhalb dieser Schließstellung nicht benötigt.

Die vorgeschlagene Erhebung bzw. erhabene Kontur der Ventilkörpermantelfläche ermöglicht somit einen kraft- und reibungsoptimierten Betrieb des Fluidventils. Dies wiederum geht einher mit einem geringeren Strom- bzw. Energieverbrauch seitens einer Aktuatoreinheit zur Steuerung des Fluidventils. Und dies wiederum wirkt einer Eigenerwärmung der Aktuatoreinheit entgegen und begünstigt somit ihre Lebensdauer.

Die vorgeschlagene Erhebung bzw. erhabene Kontur erleichtert zudem die Montage eines Fluidventils, welches die zuvor beschriebene Dichtungsanordnung aufweist.

Die Oberfläche der Kontur nebst ihrer Übergänge zu dem die Kontur aufweisenden Abschnitt des Ventilkörpers ist dabei vorteilhafterweise derart glatt ausgebildet, dass die Dichtungen beim Zusammenwirken mit der Kontur nicht beschädigt werden.

Erfindungsgemäß ist die Erhebung vorteilhafterweise geschlossen umlaufend auf der Ventilkörpermantelfläche angeformt. Dies bedingt eine gleichmäßig elastische Verformung der Dichtung entlang ihrer Umfangserstreckung, d.h. eine gleichmäßige Aktivierung der Dichtung entlang ihrer Umfangserstreckung.

Nach einer weiteren Ausführungsform kann der die Erhebung aufweisende Abschnitt des Ventilkörpers kugelförmig ausgebildet sein. Dies geht mit einer besonders guten Dichtwirkung der Dichtungsanordnung einher. Grundsätzlich kann der Ventilkörper aber auch zylindrisch bzw. im Wesentlichen zylindrisch ausgebildet sein oder gar eine andere Formgebung aufweisen, etwa eine abschnittsweise kugelförmige und/oder zylinderförmige Formgebung. Auch eine andere davon abweichend konvexe Auswölbung des die Erhebung aufweisenden Abschnitts des Ventilkörpers ist grundsätzlich denkbar.

Nach einer weiteren Ausführungsform kann eine dem Ventilkörper zugewandte Stirnseite bzw. ein dem Ventilkörper zugewandtes, stirnseitiges Ende der Dichtung gegenüber einer Längsrichtung der Dichtung, korrespondierend zur Formgebung des Ventilkörpers schräg gestellt bzw. geneigt sein sein. Die Stirnseite bzw. das stirnseitige Ende kann dabei mit der Längsrichtung einen Winkel von etwa 45° bis 75° einschließen. Auch dies begünstigt die Dichtwirkung der Dichtungsanordnung.

Es wird ferner ein Fluidventil mit einer Dichtungsanordnung der zuvor beschriebenen Art zur Abdichtung zumindest eines Anschlussbereiches des Fluidventils, insbesondere in Gestalt eines Mehrwege-Fluidventils - welches als Mischventil und/oder Verteilerventil fungieren kann - vorgeschlagen. Unter einem Fluidventil kann aber grundsätzlich auch ein Umschaltventil, Absperrventil und dergleichen mehr verstanden werden.

Ferner wird eine Verwendung eines solchen Fluidventils als Kühlwasserventil, insbesondere eines Fahrzeugs vorgeschlagen. Das Kühlwasserventil kann dabei die Funktion eines Mischventils, Verteilerventils, Umschaltventils, Absperrventils und/oder dergleichen mehr haben.

Im Weiteren wird die Erfindung unter Bezugnahme auf Figurendarstellungen im Einzelnen erläutert. Aus den Unteransprüchen und der nachfolgend detaillierten Beschreibung einer vorgeschlagenen Ausführungsform ergeben sich weitere vorteilhafte Weiterbildungen der Erfindung. Hierzu zeigen:
- Fig.1: eine Ausführungsform einer vorgeschlagenen Dichtungsanordnung in einer perspektivischen Ansicht,
- Fig.2: den in Fig. 1 gezeigten, vorgeschlagenen Ventilkörper der Dichtungsanordnung in einer perspektivischen Ansicht,
- Fig.3: ein Mehrwege-Fluidventil in einer Schnittdarstellung mit der in Fig.1 gezeigten Dichtungsanordnung und
- Fig.4: einen vergrößerten Ausschnitt aus der Fig.3.

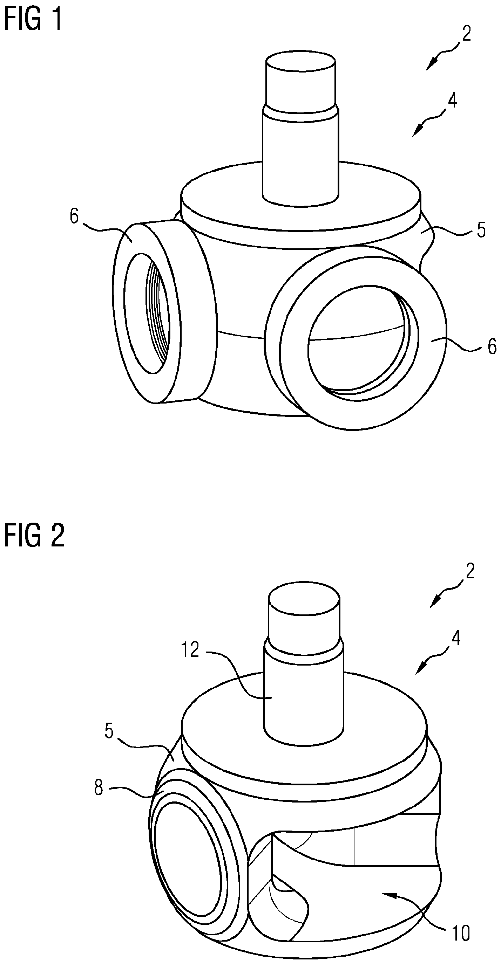

Fig.1 veranschaulicht eine Dichtungsanordnung 2 zur Verwendung in einem Kühlwasserventil bzw. Kühlwassersteuerventil - oder auch Kühlwasserregelventil genannt - eines Fahrzeugs. Die Dichtungsanordnung 2 umfasst dabei einen aus einem Kunststoff, etwa gespritzt ausgebildeten, stellbaren Ventilkörper 4 und insgesamt zwei oder drei Dichtungen 6. Der Ventilkörper 4 kann dabei z.B. aus einem PA66-, PPA- oder PPS-Kunststoff ausgeformt sein.

Der Abschnitt 5 des Ventilkörpers 4, an dem die Dichtungen 6 anliegen, ist dabei vorteilhafterweise kugelförmig ausgeformt. Grundsätzlich kann der Abschnitt 5 zylinder- und/oder kugelförmig ausgebildet sein. Die konvexe Wölbung des Abschnitts 5 kann dabei auch von einer klassischen Kugelform abweichen.

Fig.2 veranschaulicht eine am Ventilkörperabschnitt 5 abschnittsweise angeformte, geschlossen umlaufende Erhebung bzw. erhabene Kontur 8, die als solche aus der Manteloberfläche des Ventilkörperabschnitts 5 kreisringförmig und korrespondierend zu den jeweils zuordenbaren, kreisringförmigen Dichtungen 6 hervorspringt bzw. sich aus dieser Manteloberfläche erhebt. Der Ventilkörper 4 ist dabei z.B. einstückig mit einem Schaft 12 ausgebildet, der an dem Ventilkörperabschnitt 5 angeformt ist. Am seinem freien Ende trägt der Schaft 12 ein Vielkeilprofil, über welches der Ventilkörper 4 mittels einer Aktuatoreinheit, in welche der Schaft 12 hineinragt, elektromotorisch in mindestens einer Richtung, vorzugsweise aber in zwei Richtungen, d.h. im Uhrzeigersinn und/oder gegen den Uhrzeigersinn verschwenkbar stellbar ist. Zu sehen ist auch ein im Ventilkörperabschnitt 5 ausgeformter Durchlass 10, durch den ein Kühlwasser hindurchströmt.

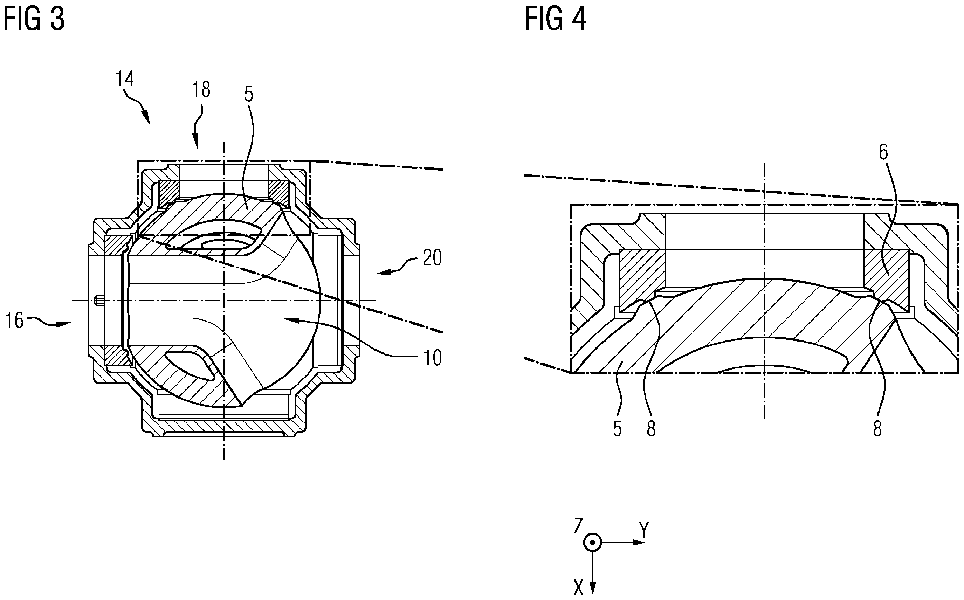

Fig.3 veranschaulicht beispielhaft ein Mehrwege-Kühlwasserventil 14 mit insgesamt drei Anschlüssen 16, 18, 20, die es bedarfsweise zu öffnen oder schließen und dichten gilt. Der Ventilkörper 4 befindet sich dabei anschaulich in einer Schließstellung bezüglich des Anschlusses 18, in welcher der Anschluss 18 durch den Ventilkörperabschnitt 5 geschlossen und vollständig abgedichtet ist. In dieser veranschaulichten Position des Ventilkörpers 4 kann das Kühlwasser durch die geöffneten Anschlüsse 16, 20 und über den Durchlass 10 strömen. Der Einfachheit halber sind in der Fig.3 nur zwei von insgesamt drei möglichen Dichtungen 6 dargestellt. Grundsätzlich kann in diesem Ausführungsbeispiel auf die dritte, nicht dargestellte Dichtung 6 auch verzichtet werden. Die Fig.3 veranschaulicht dabei, dass nur bezüglich des geschlossenen Anschlusses 18 der Ventilkörperabschnitt 5 über seine Erhebung 8 mit der zugeordneten Dichtung 6 in Wirkverbindung steht. Bezüglich der übrigen in dieser Position des Ventilkörpers 5 offenen Anschlüsse 16, 20 hingegen besteht diese Wirkverbindung nicht, weil die Dichtwirkung der jeweils zugeordneten Dichtungen 6 in dieser Position des Ventilkörpers 5 nicht benötigt wird.

Insbesondere der Fig.4 ist das Zusammenwirken zwischen der Erhebung 8 und einer dem Ventilkörperabschnitt 5 zugewandten Stirnseite der Dichtung 6 zu entnehmen. Die Dichtung 6 ist dabei durch den Ventilkörperabschnitt 5 elastisch verformt. Die Dichtung 6 ist z.B. einstückig ausgebildet und umfasst ein elastisch verformbares Kunststoffbasisteil, etwa aus einem Elastomer, bspw. aus EPDM (EPDM steht dabei für Ethylen-Propylen-Dien), auf dessen ventilkörperseitigen, ersten Stirnseite z.B. eine dünne Hart-Kunststoffschicht aufvulkanisiert ist. Diese als Hart-Dichtelement fungierende Hart-Kunststoffschicht kann z.B. aus PTFE (PTFE steht dabei für Polytetrafluorethylen) und/oder dergleichen mehr gefertigt sein. Die ventilkörperseitige Stirnseite der Dichtung 6 umfasst zudem vorteilhafterweise eine kreisringförmig geschlossen umlaufende Wulst, die mit der Erhebung 8 statisch und linienförmig bzw. linienartig und/oder flächenförmig bzw. flächenartig dichtend zusammen wirkt. Im Bereich der Wulst ist die dünne Hart-Kunststoffschicht komplementär zum Kunststoffbasisteil geformt, wobei sich das Kunststoffbasisteil in die Hart-Kunststoffschicht erstreckt und dabei die Wulst bildet. Die gegenüber liegende, zweite Stirnseite der Dichtung 6 hingegen, die ebenfalls mit einer Wulst versehen sein kann, liegt dynamisch und linienförmig bzw. linienartig und/oder flächenförmig bzw. flächenartig dichtend an einem Ventilgehäuse des Fluidventils 14 an. Die Dichtung 6 umfasst ferner vorteilhafterweise einen Stützring aus Kunststoff oder Metall, der relativ zur Durchgangsöffnung der Dichtung 6 innenseitig bzw. innenliegend am Kunststoffbasisteil anliegt und einen stabilen Verbau der Dichtung 6 in das Ventilgehäuse ermöglicht.

Grundsätzlich ist die durch die Fig.1, 3 und 4 dargestellte Dichtungsanordnung 2 nicht auf die beschriebene Dichtung 6 zu reduzieren. Diese beschriebene Dichtung 6 ist vielmehr nur beispielhaft zu verstehen, denn der im Rahmen dieser Offenbarung vorgeschlagene Ventilkörper 4, 5 ist auch mit anderen Dichtungsausbildungen kombinierbar, die als solche vorteilhafterweise durch den Ventilkörper 4, 5 elastisch verformbar und dadurch aktivierbar sind.

Die Erhebung bzw. erhabene Kontur 8 des Ventilkörperabschnitts 5 wirkt wie eine Stufe, die es beim Schließen und Dichten eines der Anschlüsse 16, 18, 20 zu überwinden gilt. Dabei wird die Kontur 8 gegen eine linienförmig bzw. linienartig und/oder flächenförmig bzw. flächenartig dichtwirkende Kontaktstelle der zugeordneten Dichtung 6 angedrückt, wodurch die Dichtung 6 elastisch verformt und dabei gestaucht und verspannt wird. Dies wiederum geht mit einer Aktivierung der Dichtung einher, die als solche erst durch diese elastische Verformung ihre ganze Dichtwirkung entfaltet. Außerhalb dieser Schließstellung hingegen erfährt die Dichtung 6 eine Entspannung, da sie nicht in Wirkverbindung mit dem Ventilkörper 5 steht, weil die Dichtwirkung dann nicht benötigt wird. Die Erhebung bzw. Kontur 8 ist dabei zweckmäßigerweise derart glatt bzw. glatt und gleitfähig ausgeführt, dass sie die jeweils zuordenbaren Dichtungen 6 beim Zusammenwirken nicht beschädigen kann.

Der vorgeschlagene Ventilkörper 4, 5 ermöglicht somit einen kraft- und reibungsoptimierten Betrieb des Fluidventils 14. Dies wiederum geht einher mit einem geringeren Strom- bzw. Energieverbrauch seitens der zuvor genannten Aktuatoreinheit zur Steuerung des Fluidventils. Und dies wiederum wirkt einer Eigenerwärmung der Aktuatoreinheit entgegen und begünstigt somit ihre Lebensdauer.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Dichtungsanordnung zur Verwendung in einem Fluidventil (14), umfassend:
• einen stellbaren Ventilkörper (4, 5) zum Öffnen und Schließen mindestens eines Anschlusses (16, 18, 20) des Fluidventils (14) sowie
• mindestens eine Dichtung (6) zur dichtenden Anlage gegen den Ventilkörper (5) einerseits und zur dichtenden Anlage gegen ein Ventilgehäuse des Fluidventils (14) andererseits,
wobei am Ventilkörper (5) abschnittsweise mindestens eine Erhebung (8) aus der Ventilkörpermantelfläche zur Aktivierung der Dichtung (6) in einer Schließstellung des Fluidventils (14) angeformt ist,
wobei die Erhebung (8) kreisförmig geschlossen umlaufend auf der Ventilkörpermantelfläche angeformt ist,
wobei eine dem Ventilkörper (5) zugewandte Stirnseite der Dichtung (6) eine kreisringförmig geschlossen umlaufende Wulst umfasst, die dazu eingerichtet ist, mit der Erhebung (8) statisch und linienförmig und/oder flächenförmig dichtend zusammen zu wirken,
wobei die Dichtung (6) ein elastisch verformbares Kunststoffbasisteil umfasst, **dadurch gekennzeichnet, dass** auf der ventilkörperseitigen Stirnseite der Dichtung (6) eine dünne Hart-Kunststoffschicht aufvulkanisiert ist, welche im Bereich der Wulst komplementär zum Kunststoffbasisteil geformt ist, wobei sich das Kunststoffbasisteil in die Hart-Kunststoffschicht erstreckt und dabei die Wulst bildet.

2. Dichtungsanordnung nach Anspruch 1, wobei der die Erhebung (8) aufweisende Abschnitt (5) des Ventilkörpers (4) zylinderförmig und/oder kugelförmig ausgebildet ist.

3. Dichtungsanordnung nach einem der vorhergehenden Ansprüche, wobei die dem Ventilkörper (5) zugewandte Stirnseite der Dichtung (6) gegenüber einer Längsrichtung (X - X) der Dichtung (6), korrespondierend zur Formgebung des Ventilkörpers (5) schräg gestellt ist.

4. Dichtungsanordnung nach Anspruch 3, wobei die Stirnseite mit der Längsrichtung (X - X) einen Winkel von 45° bis 75° einschließt.

5. Fluidventil mit einer Dichtungsanordnung (2) nach einem der vorhergehenden Ansprüche zur Abdichtung zumindest eines Anschlussbereiches des Fluidventils (14).

6. Fluidventil nach Anspruch 5 in Gestalt eines Mehrwege-Fluidventils (14).

7. Verwendung eines Fluidventils (14) nach Anspruch 5 oder 6 als Kühlwasserventil.

8. Verwendung eines Fluidventils (14) nach Anspruch 5 oder 6 als Kühlwasserventil eines Fahrzeugs.

## Claims

1. Seal arrangement for use in a fluid valve (14), comprising:
• an actuatable valve body (4, 5) for opening and closing at least one connection (16, 18, 20) of the fluid valve (14), and
• at least one seal (6) for sealing abutment against the valve body (5) at one side and for sealing abutment against a valve housing of the fluid valve (14) at the other side,
wherein integrally formed on the valve body (5) sectionally is at least one elevation (8) from the valve-body lateral surface for activating the seal (6) in a closed position of the fluid valve (14), wherein the elevation (8) is integrally formed in a circular closed encircling manner on the valve-body lateral surface,
wherein a face side, facing the valve body (5), of the seal (6) comprises a circular-ring-shaped closed encircling bead which is configured to interact with the elevation (8) with static and linear and/or areal sealing action,
wherein the seal (6) comprises an elastically deformable plastic base part,
**characterized in that**
a thin hard plastic layer is vulcanized on the valve-body-side face side of the seal (6), which layer, in the region of the bead, is shaped in a manner complementary to the plastic base part, wherein the plastic base part extends into the hard plastic layer and in the process forms the bead.

2. Seal arrangement according to Claim 1, wherein that portion (5) of the valve body (4) having the elevation (8) is of cylindrical and/or spherical form.

3. Seal arrangement according to either of the preceding claims, wherein that face side of the seal (6) facing the valve body (5) is set at an angle with respect to a longitudinal direction (X - X) of the seal (6) in a manner corresponding to the shaping of the valve body (5).

4. Seal arrangement according to Claim 3, wherein the face side includes an angle of 45° to 75° with the longitudinal direction (X - X).

5. Fluid valve having a seal arrangement (2) according to one of the preceding claims for sealing off at least one connection region of the fluid valve (14).

6. Fluid valve according to Claim 5, in the form of a multi-way fluid valve (14).

7. Use of a fluid valve (14) according to Claim 5 or 6 as a cooling-water valve.

8. Use of a fluid valve (14) according to Claim 5 or 6 as a cooling-water valve of a vehicle.

## Revendications

1. Ensemble d'étanchéité destiné à être utilisé dans une soupape à fluide (14), comprenant :
• un corps de soupape réglable (4, 5) pour ouvrir et fermer au moins un raccord (16, 18, 20) de la soupape à fluide (14), et
• au moins une garniture d'étanchéité (6) destinée à venir en appui étanche contre le corps de soupape (5) d'une part et à venir en appui étanche contre un boîtier de soupape de la soupape à fluide (14) d'autre part,
dans lequel au moins un bossage (8) composé de la surface latérale de corps de soupape est par endroits rapporté au corps de soupape (5) pour activer la garniture d'étanchéité (6) dans une position de fermeture de la soupape à fluide (14),
dans lequel le bossage (8) est rapporté à la surface latérale de corps de soupape sur la périphérie en étant fermé en cercle,
dans lequel une face frontale, tournée vers le corps de soupape (5), de la garniture d'étanchéité (6) comprend un bourrelet périphérique fermé en cercle qui est conçu pour coopérer avec le bossage (8) en étanchéité de manière statique et linéaire et/ou en nappe,
dans lequel la garniture d'étanchéité (6) comprend une partie de base en matière plastique à déformation élastique,
**caractérisé en ce qu'**une fine couche de matière plastique dure est vulcanisée sur la face frontale côté corps de soupape de la garniture d'étanchéité (6) et est formée au niveau du bourrelet de façon complémentaire à la partie de base en matière plastique, dans lequel la partie de base en matière plastique s'étend dans la couche de matière plastique dure tout en formant le bourrelet.

2. Ensemble d'étanchéité selon la revendication 1, dans lequel la portion (5) présentant le bossage (8) du corps de soupape (4) est réalisée de manière cylindrique et/ou sphérique.

3. Ensemble d'étanchéité selon l'une quelconque des revendications précédentes, dans lequel la face frontale tournée vers le corps de soupape (5) de la garniture d'étanchéité (6) est inclinée par rapport à une direction longitudinale (X-X) de la garniture d'étanchéité (6) de façon à correspondre à la forme du corps de soupape (5).

4. Ensemble d'étanchéité selon la revendication 3, dans lequel la face frontale forme avec la direction longitudinale (X-X) un angle de 45° à 75°.

5. Soupape à fluide comprenant un ensemble d'étanchéité (2) selon l'une quelconque des revendications précédentes pour rendre étanche au moins une zone de raccordement de la soupape à fluide (14).

6. Soupape à fluide selon la revendication 5 sous la forme d'une soupape à fluide (14) à plusieurs voies.

7. Utilisation d'une soupape à fluide (14) selon la revendication 5 ou 6 comme soupape à eau de refroidissement.

8. Utilisation d'une soupape à fluide (14) selon la revendication 5 ou 6 comme soupape à eau de refroidissement d'un véhicule.
